# EUROPÄISCHE PATENTSCHRIFT

(11) **EP 2 716 418 B1**
(45) Veröffentlichungstag und Bekanntmachung des Hinweises auf die Patenterteilung: **16.01.2019**
(21) Anmeldenummer: 13004647.7
(22) Anmeldetag: 25.09.2013
(51) Int. Cl.: B25J 15/04, B25J 19/00, F16L 39/00, F16L 25/01, B23Q 1/00

(54) **Elektrische und pneumatische Mediendurchführung**
Electrical and pneumatic media feedthrough
Passage de fluides électrique et pneumatique

(30) Priorität: 04.10.2012 DE 202012009505 U
(43) Veröffentlichungstag der Anmeldung: 09.04.2014
(73) Patentinhaber: STARK Spannsysteme GmbH, 6830 Rankweil (AT)
(72) Erfinder: Geiger, Dietmar, 6850 Dornbirn (AT); Egger, Remo, 6941 Langenegg (AT)
(74) Vertreter: Beier, Ralph

(56) Entgegenhaltungen:
- DE-A1- 3 214 025
- DE-B3- 10 357 621
- DE-U1- 20 001 587
- JP-A- H01 289 691
- US-A- 5 372 567

## Beschreibung

Die Erfindung betrifft eine Kopplungseinrichtung, eine Steckereinrichtung und eine aus diesen zusammengesetzte Mediendurchführung zwischen zwei Bauteilen, z. B. zwischen einem automatisierten System, wie einer Robotereinrichtung, und einer Greifereinrichtung.

Aus DE 200 01 587 U1 ist eine Mehrfachkupplung zur Verbindung eines Maschinentisches mit einer Palette bekannt. Die Mehrfachkupplung weist Medienkoppler, z. B. zur Druckluftübertragung, und eine Ausblaseinrichtung auf, mit der Schmutz von den Medienkopplern entfernt werden kann. Die herkömmliche Mehrfachkupplung kann sich in der Praxis wegen der Beschränkung auf Medienkoppler als nachteilig erweisen. Wenn z. B. zusätzlich zur Druckluftübertragung auch ein elektrischer Kontakt zwischen dem Maschinentisch und der Palette hergestellt werden soll, muss hierzu bauraumverbrauchend eine zusätzliche Verbindung eingerichtet werden. Des Weiteren hat sich als nachteilig erwiesen, dass die Mehrfachkupplung bei Anwendung mit einer Palette, die nicht für die Druckluftübertragung ausgelegt ist, leicht verschmutzt.

Generell sind derzeit keine elektrischen und pneumatischen Mediendurchführungen verfügbar, die den Anforderungen von Schutzarten, wie z. B. der Schutzart IP 65 genügen. Es gibt zwar für Robotergreifer elektrische Mediendurchführungen, die jedoch keinen IP-Schutz und auch keine Selbstreinigung haben, um eine sichere elektrische Kontaktierung zu gewährleisten. Auch ist es bei den herkömmlichen Mediendurchführungen nicht möglich, dass der Roboter andere Teile aufnehmen kann, die keine Mediendurchführung erfordern, da es bei der Anlage der Roboterarmseite gegen eine ebene Fläche ohne ein Kopplungs-Gegenstück zu Behinderungen und Verschmutzungen kommen kann. Aus US 5 372 567 A und DE 32 14 025 A1 sind eine Kopplungseinrichtung bzw. eine Steckereinrichtung gemäß dem Oberbegriff der Ansprüche 1 bzw. 8 bekannt. Nachteilig an diesen bekannten Einrichtungen ist jedoch die Tatsache, dass Schmutz oder Wasser eindringen kann.
Die Aufgabe der Erfindung ist es, eine verbesserte Mediendurchführung bereitzustellen, mit der Nachteile herkömmlicher Mediendurchführungen vermieden werden können. Die Mediendurchführung soll insbesondere einen erweiterten Anwendungsbereich und/oder eine verbesserte Betriebssicherheit haben. Diese Aufgabe wird durch eine Kopplungseinrichtung, eine Steckereinrichtung bzw. eine aus diesen zusammengesetzte Mediendurchführung mit den Merkmalen der unabhängigen Ansprüche gelöst. Vorteilhafte Ausführungsformen und Anwendungen der Erfindung ergeben sich aus den abhängigen Ansprüchen.
Gemäß einem ersten Gesichtspunkt der Erfindung wird eine Kopplungseinrichtung bereitgestellt, die zur Mediendurchführung zwischen zwei Bauteilen, z. B. zwischen einem automatisierten System, wie einer Robotereinrichtung, und einer Greifereinrichtung eingerichtet ist. Die Kopplungseinrichtung umfasst eine erste Kopplerplatte (erster Basiskörper), die mit mindestens einem Pneumatikkoppler ausgestattet ist, und eine Ausblaseinrichtung, die zur Beaufschlagung der ersten Kopplerplatte mit einem Luftstrom eingerichtet ist, wobei die erste Kopplerplatte mindestens einen elektrischen Kontakt aufweist. Die erste Kopplerplatte weist außerdem eine umlaufende Dichteinrichtung auf, die angeordnet ist, den mindestens einen Pneumatikkoppler, die Ausblaseinrichtung und den mindestens einen elektrischen Kontakt in einem Zustand, in dem die Kopplungseinrichtung mit einem benachbarten Bauteil gekoppelt ist, gegenüber der Umgebung abzudichten.

Gemäß einem zweiten Gesichtspunkt der Erfindung wird eine Steckereinrichtung bereitgestellt, die zur Mediendurchführung zwischen zwei Bauteilen, nämlich zur Verbindung mit einer Kopplungseinrichtung gemäß dem o. g. ersten Gesichtspunkt eingerichtet ist und eine zweite Kopplerplatte (zweiter Basiskörper) umfasst, die mindestens einen Pneumatikkoppler und mindestens einen elektrischen Kontakt aufweist, wobei die zweite Kopplerplatte eine umlaufende Dichtlippe aufweist, die angeordnet ist, den mindestens einen Pneumatikkoppler und den mindestens einen elektrischen Kontakt in einem Zustand, in dem die Steckereinrichtung mit der Kopplungseinrichtung gekoppelt ist, gegenüber der Umgebung abzudichten.

Gemäß einem dritten zweiten Gesichtspunkt der Erfindung wird eine Mediendurchführung bereitgestellt, die zur Kopplung von zwei Bauteilen eingerichtet ist und eine Kopplungseinrichtung gemäß dem o. g. ersten Gesichtspunkt und eine Steckereinrichtung gemäß dem o. g. zweiten Gesichtspunkt umfasst, wobei die Dichteinrichtung der Kopplungseinrichtung eine Dichtfläche ist.

Die Erfindung ermöglicht vorteilhafterweise die Herstellung und Montage der Mediendurchführung mit pneumatischen und elektrischen Durchgängen, die als trennbare Verbindung von z. B. automatisierten Systemen (Roboter u. dgl.) zu z. B. Greifstücken dient, wobei die Ausblaseinrichtung eine aktive Fernhaltung von Verschmutzungen auf den pneumatischen und elektrischen Kontaktstellen bewirkt. Vorteilhafterweise werden mit der Kopplungseinrichtung, der Steckereinrichtung bzw. der Mediendurchführung pneumatische und elektrische Verbindungen in einer gemeinsamen Kupplung kombiniert. Von den Erfindern wurde festgestellt, dass mit der Ausblaseinrichtung nicht nur wie bei herkömmlichen Mehrfachkupplungen Druckluftanschlüsse, sondern auch elektrische Kontakte zuverlässig von Schmutz freigehalten werden können. Die Erfindung in ihren verschiedenen Gesichtspunkten ermöglicht bauraumsparend die Kombination von mehreren, z. B. zwei, drei oder mehr Pneumatikkopplern mit mehrere, z. B. zwei, drei oder mehr elektrischen Kontakten in einer Mediendurchführung. Die Pneumatikkoppler und die elektrischen Kontakte sind z. B. jeweils kreisförmig verteilt um das Zentrum der Kontaktplatte angeordnet, wo vorzugsweise mindestens eine Düse der Ausblaseinrichtung mündet.

Die Dichteinrichtung ist angeordnet, um in einem Zustand, in dem die Kopplungseinrichtung mit einem benachbarten Bauteil, z. B. der Steckereinrichtung gemäß dem o. g. zweiten Gesichtspunkt oder einer anliegenden Platte verbunden ist (gekoppelter Zustand), die erste Kopplerplatte lateral einzuschließen. Vorteilhafterweise ermöglicht die Dichteinrichtung, dass die Kopplungseinrichtung bei Verbindung mit einem Bauteil, das nicht für eine Pneumatikkopplung ausgelegt ist, nicht verschmutzt. Des Weiteren wird verhindert, dass unerwünscht Wasser zu der Kopplungseinrichtung gelangt.
Besonders bevorzugt umfasst die Dichteinrichtung eine am Rand der ersten Kopplerplatte umlaufende Dichtlippe aus nachgiebigem, insbesondere elastischem Material. Die Dichtlippe ragt über die erste Kontaktplatte vor, um im gekoppelten Zustand das benachbarte Bauteil zu berühren und komprimiert zu werden. Alternativ umfasst die Dichteinrichtung eine umlaufende Dichtfläche, die zur Auflage einer Dichtlippe aus nachgiebigem, insbesondere elastischem Material, eingerichtet ist. Mit anderen Worten, die Dichtlippe kann an der Kopplungseinrichtung, der Steckereinrichtung oder einem anderen benachbarten Bauteil vorgesehen sein.
Gemäß weiteren bevorzugten Ausführungsformen der Erfindung umfassen die erste und/oder die zweite Kopplerplatte ein elektrisch isolierendes Material, durch das die ersten und/oder die zweiten elektrischen Kontakte voneinander isoliert sind. Vorteilhafterweise wird dadurch der Aufbau der Kopplungseinrichtung und/oder der Steckereinrichtung vereinfacht. Das elektrisch isolierende Material umfasst z. B. einen Kunststoff oder Keramik, wie PVC oder einen Polyesterharz. Besonders bevorzugt besteht die erste und/oder die zweite Kopplerplatte vollständig aus dem elektrisch isolierenden Material, in das die elektrischen Kontakte eingebettet sind.

Gemäß einer weiteren bevorzugten Ausführungsform der Erfindung weist die erste Kopplerplatte einen zentralen Kontaktabschnitt auf, in dem der mindestens eine elektrische Kontakt und die Ausblaseinrichtung angeordnet sind. Der Kontaktabschnitt ist ein in der Mitte der im ungekoppelten Zustand frei liegenden Oberfläche der ersten Kopplerplatte vorgesehener Bereich. Die Ausblaseinrichtung ist besonders bevorzugt in der Mitte des Kontaktabschnitts und der ersten Kopplerplatte angeordnet und von mehreren elektrischen Kontakten kreisförmig verteilt umgeben.

Wenn der Kontaktabschnitt gemäß einer weiteren, besonders vorteilhaften Variante der Erfindung in der Oberfläche der ersten Kopplerplatte abgesenkt ist, ergeben sich Vorteile für die Reinigung der elektrischen Kontakte und für deren Schutz gegen unbeabsichtigte Berührung. Die elektrischen Kontakte sind in der Vertiefung angeordnet, die der Kontaktabschnitt bildet. Falls das Bauteil mit der Kopplungseinrichtung mit einem Bauteil ohne Steckereinrichtung verbunden ist, wird selbst bei einer metallischen Plananlage, z. B. durch eine Palette ohne Mediendurchführung, kein elektrischer Kurzschluss erzeugt.

Weitere Vorteile der Erfindung ergeben sich, wenn die Ausblaseinrichtung mindestens eine der folgenden Düsen aufweist. Gemäß einer Variante der Erfindung ist eine Axialdüse vorgesehen, mit der der Luftstrom von der Oberfläche der ersten Kopplerplatte in deren Umgebung gerichtet werden kann. Der Luftstrom wird mit der Axialdüse vorzugsweise in axialer Richtung senkrecht zur ersten Kopplerplatte abgeblasen. Vorteilhafterweise wird damit die Steckereinrichtung bei deren Annäherung von Schmutz befreit und zusätzlich durch die Umkehrung des Luftstroms an der Steckereinrichtung auch an der Kopplungseinrichtung eine reinigende Wirkung erzielt.

Alternativ oder zusätzlich ist gemäß einer weiteren Variante der Erfindung mindestens eine Lateraldüse vorgesehen, die mit einer Umlenkplatte der Ausblaseinrichtung zusammenwirkt. Der Luftstrom wird mit der Lateraldüse über die Umlenkplatte auf die erste Kopplerplatte, insbesondere auf den mindestens einen elektrischen Kontakt im Kontaktabschnitt gerichtet.

Gemäß einer weiteren bevorzugten Ausführungsform der Erfindung umfasst die Ausblaseinrichtung einen in die erste Kopplerplatte eingelassenen Hohlzylinder, an dessen vorderen Ende die mindestens eine Axialdüse und/oder die mindestens eine Lateraldüse mit der Umlenkplatte angeordnet ist und dessen rückseitiges Ende mit einer Druckluftquelle koppelbar ist. Der Hohlzylinder bildet vorteilhafterweise eine Druckluftleitung, von der die Luft über die Axial- und/oder Lateraldüsen ausströmt.

Besonders bevorzugt ist der Hohlzylinder in der ersten Kopplerplatte senkrecht zu deren Oberfläche verschiebbar angeordnet. In einer vorstehenden Position des Hohlzylinders ragen die mindestens eine Axialdüse und/oder die mindestens eine Lateraldüse mit der Umlenkplatte jeweils über die erste Kopplerplatte vor. In einer versenkten Position des Hohlzylinders ist diese in der ersten Kopplerplatte so versenkt, dass er über deren Oberfläche, insbesondere über die durch die Dichteinrichtung aufgespannte Fläche nicht hinausragt. Vorteilhafterweise kann die Verschiebung unter Wirkung der Druckluft erfolgen, die den Hohlzylinder im ungekoppelten Zustand in die vorstehende Position vorschiebt, wobei ein radialer Vorsprung am rückseitigen Ende des Hohlzylinders eine Trennung von der Kopplerplatte verhindert. Im gekoppelten Zustand wird der Hohlzylinder mit den Düsen zumindest teilweise in der Kopplerplatte versenkt.

Gemäß einer weiteren Variante der Erfindung ist der mindestens eine Pneumatikkoppler der Kopplungseinrichtung in der ersten Kopplerplatte versenkt angeordnet. Der mindestens eine Pneumatikkoppler ragt nicht über die Oberfläche der ersten Kopplerplatte vor. Die pneumatischen Kontaktstellen sind somit als Löcher oder vertieft in der ersten Kopplerplatte ausgeführt. Dies ermöglicht vorteilhafterweise, dass das Bauteil mit der Kopplungseinrichtung mit einem Bauteil wahlweise mit oder ohne passende Steckereinrichtung verbunden werden kann. Der mindestens eine Pneumatikkoppler hat z. B. die Gestalt einer Buchse in der ersten Kopplerplatte, in die ein Pneumatikkoppler der Steckeinrichtung einführbar ist. Entsprechend ist vorzugsweise der mindestens eine Pneumatikkoppler der Steckereinrichtung von der zweiten Kopplerplatte abstehend angeordnet. Alternativ ist jedoch auch möglich, dass der mindestens eine Pneumatikkoppler als Steckkoppler ausgeführt ist, der in der ersten Kopplerplatte versenkt zur Verbindung mit einer von der Steckeinrichtung vorstehenden Buchse angeordnet ist.

Um im gekoppelten Zustand den elektrischen Kontakt zu verbessern, ist der mindestens eine elektrische Kontakt vorzugsweise auf Seiten der Steckereinrichtung vorstehend und federnd angeordnet, während der mindestens eine elektrische Kontakt auf Seiten der Kopplungseinrichtung vorzugsweise in die Oberfläche der Kopplerplatte, insbesondere des Kontaktabschnitts, fest eingelassen ist. Vorteilhafterweise wird damit ein Toleranzausgleich erreicht und die Zuverlässigkeit der Medienschnittstellen verbessert.
Es wird auch ein Verfahren zur Kopplung eines ersten Bauteils, das mit der Kopplungseinrichtung ausgestattet ist, mit einem zweiten Bauteil, das mit der Steckereinrichtung ausgestattet ist, beschrieben, wobei die Dichteinrichtung der Kopplungseinrichtung eine Dichtfläche umfasst, und die Kopplungseinrichtung und die Steckereinrichtung von einem ungekoppelten Zustand in einen gekoppelten Zustand oder umgekehrt überführt werden.
Im ungekoppelten Zustand wird die Ausblaseinrichtung mit einem Luftdruck beaufschlagt und der Luftstrom mindestens auf die erste Kontaktplatte aufgeblasen. Im gekoppelten Zustand sind die Pneumatikkoppler und die elektrischen Kontakte der Kopplungseinrichtung und der Steckereinrichtung miteinander verbunden, wobei die zweite Kontaktplatte der Steckereinrichtung die Ausblaseinrichtung blockiert.
Besonders bevorzugt ist die erste Kopplerplatte der Kopplungseinrichtung an einem Arm einer Robotereinrichtung vorgesehen, während die zweite Kopplerplatte der Steckereinrichtung an einer Greifereinrichtung (Träger- und Halteeinrichtung), z. B. für ein Werkstück vorgesehen ist. Vorteilhafterweise können mit dem Arm der Robotereinrichtung Bauteile mit der passenden Steckereinrichtung oder Bauteile ohne eine Steckereinrichtung erfasst werden, ohne dass die Kopplungseinrichtung beeinträchtigt wird.
Alternativ sind jedoch auch spezielle Anwendungen der Erfindung möglich, bei denen die Kopplungseinrichtung mit der Greifeinrichtung und die Steckereinrichtung mit dem Arm der Robotereinrichtung verbunden sind.

Weitere Einzelheiten und Vorteile der Erfindung werden im Folgenden unter Bezug auf die beigefügten Zeichnungen beschrieben. Es zeigen:
- Figuren 1 und 2:: Ausführungsformen der erfindungsgemäßen Kopplungs- und Steckereinrichtungen in Verbindung mit einem Roboterarm und einer Palette;
- Figuren 3 und 4:: weitere Einzelheiten der erfindungsgemäßen Kopplungs- und Steckereinrichtungen;
- Figuren 5 und 6:: weitere Einzelheiten der erfindungsgemäßen Kopplungseinrichtung; und
- Figur 7:: weitere Einzelheiten der erfindungsgemäßen Steckereinrichtung.

Ausführungsbeispiele der Erfindung werden im Folgenden unter beispielhaftem Bezug auf Kopplungs- und Steckereinrichtungen zur Verbindung von einem Roboterarm und einer Palette mit Medienanschluss beschrieben. Die Umsetzung der Erfindung ist jedoch nicht auf diese Beispiele beschränkt, sondern entsprechend als Mediendurchführung zwischen anderen Bauteilen, wie z. B. Maschinenteilen oder Werkzeugen, ausführbar. Die Zeichnungen sind schematische Darstellungen, die der Illustration von Merkmalen der Erfindung dienen. In der Praxis können die gezeigten Teile der erfindungsgemäßen Kopplungs- und Steckereinrichtungen mit abgewandelten geometrischen Eigenschaften und Größenverhältnissen realisiert sein. Der Betrieb eines Roboters, die Handhabung einer Greifeinrichtung oder pneumatische Steuerungen werden im Einzelnen nicht beschrieben, da diese Verfahren an sich aus dem Stand der Technik bekannt sind.

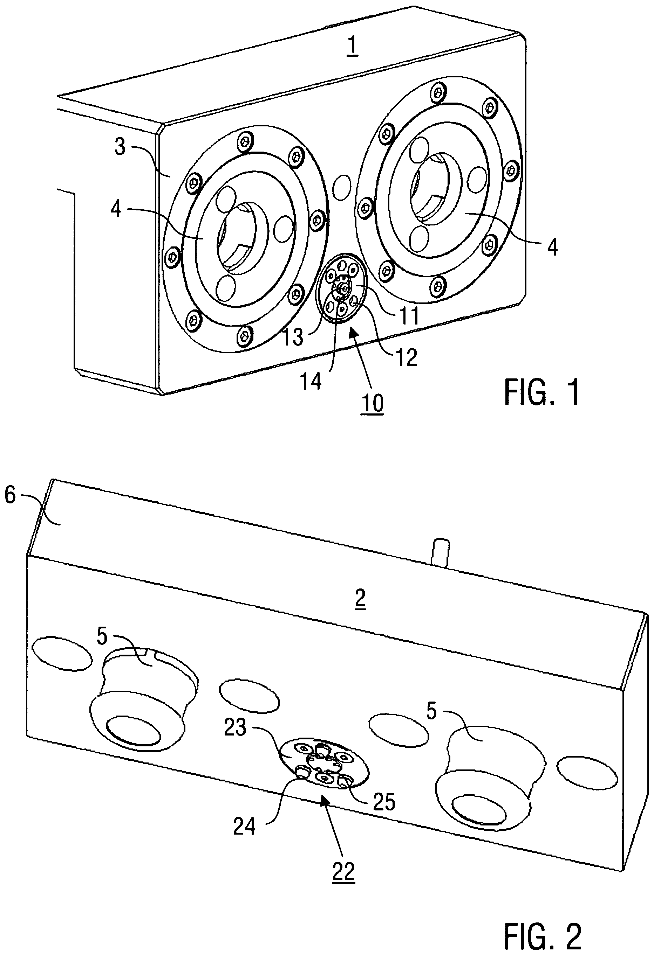

Figur 1 illustriert das freie Ende eines Roboterarms 1, das mit der erfindungsgemäßen Kopplungseinrichtung 10 ausgestattet ist. Der Roboterarm 1 weist eine Endplatte 3 auf, die mit zwei Einzugselementen 4 ausgestattet ist. Die Einzugselemente 4 sind Aufnahmen für Einzugsnippel 5 einer Palette 2 (siehe Figur 2). Mit den Einzugselementen 4 werden die Einzugsnippel 5 an sich bekannter Weise roboterseitig fixiert und verspannt.

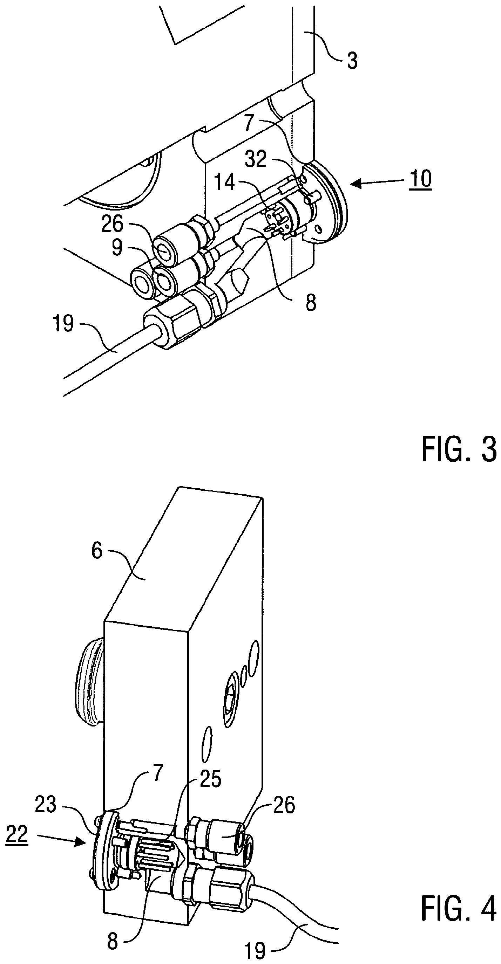

Die Kopplungseinrichtung 10 ist an der Endplatte 3 mittig zwischen den Einzugselementen 4 angeordnet. Die Kopplungseinrichtung 10 weist eine erste Kopplerplatte 11, z. B. aus PVC, drei Pneumatikkoppler 12, eine Ausblaseinrichtung 13 und sechs elektrische Kontakte 14 auf, die mit weiteren Einzelheiten unten beschrieben sind. Die erste Kopplerplatte 11 kann mit der Endplatte 3 einstückig geformt oder bevorzugt, wie in den folgenden Figuren gezeigt, in einer Vertiefung 7 (siehe Figur 3) in der Endplatte 3 eingesetzt sein. Die ebene Oberfläche der ersten Kopplerplatte 11 erstreckt sich parallel zur Ebene der Endplatte 3. Die zu dieser Ebene senkrechte Richtung wird hier als axiale Richtung der Kopplungseinrichtung 10 bezeichnet.

Figur 2 illustriert einen Ausschnitt einer Palette 2, die mit der erfindungsgemäßen Steckereinrichtung 22 ausgestattet ist. Die Palette 2 weist eine Seitenplatte 6 auf, die mit zwei Einzugsnippeln 5 ausgestattet ist. Die Einzugsnippel 5 haben einen Durchmesser und ein Profil derart, dass sie in den Einzugselementen 4 des Roboterarms 1 aufgenommen und verspannt werden können. Die Steckereinrichtung 22 mit einer zweiten Kopplerplatte 23, z. B. aus PVC, drei Pneumatikkopplern 24 und sechs elektrischen Kontakten 25 ist an der Seitenplatte 6 mittig zwischen den Einzugsnippeln 5 angeordnet. Die Pneumatikkoppler 24 und die elektrischen Kontakte 25 der Steckereinrichtung 22 sind spiegelsymmetrisch zu den Pneumatikkopplern 12 und den elektrischen Kontakte 14 der Kopplungseinrichtung 10 angeordnet. Auch die zweite Kopplerplatte 23 kann mit der Seitenplatte 6 einstückig geformt oder bevorzugt in einer Vertiefung in der Seitenplatte 6 eingesetzt sein.

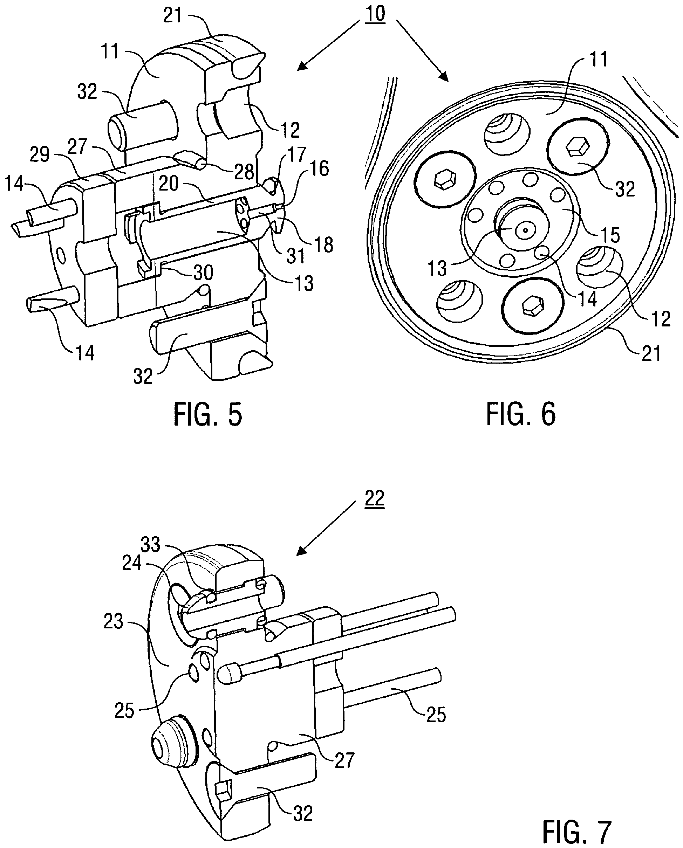

In Figur 3 sind die Einbettung der Kopplungseinrichtung 10 in die Endplatte 3 des Roboterarms und die Medienanschlüsse der Kopplungseinrichtung 10 in teilweise aufgebrochener Ansicht illustriert. Aus Gründen der Übersichtlichkeit sind nicht alle Medienanschlüsse gezeigt. Die Endplatte 3 weist eine Vertiefung 7 auf, in der die erste Kopplerplatte 11 mit Schrauben 32 (siehe Figuren 5, 6) befestigt ist und an die sich eine Ausnehmung 8 anschließt. Die Ausnehmung 8 ist mit einer Druckleitung 9 einer Druckluftquelle (nicht dargestellt) verbunden. Des Weiteren sind in der Ausnehmung 8 elektrische Leitungen (nicht dargestellt) angeordnet, die von den elektrischen Kontakten 14 der Kopplungseinrichtung 10 zu einem Anschlusskabel 19 führen. In die Endplatte 3 sind des Weiteren Pneumatikanschlüsse 26 eingelassen, die mit den Pneumatikkopplern 12 (siehe Figuren 5 und 6) verbunden sind.

Die Seitenplatte 6 der Palette 2 ist gemäß Figur 4 entsprechend mit einer Vertiefung 7 versehen, in der die zweite Kopplerplatte 23 der Steckereinrichtung 22 angeschraubt ist und die mit einer Ausnehmung 8 zur Aufnahme der rückseitigen, federnden elektrischen Kontakte 25 verbunden ist. Die Kontakte 25 sind mit einem Anschlusskabel 19 verbunden, während die Pneumatikkoppler 24 (siehe Figur 7) mit Pneumatikanschlüssen 26 in der Seitenplatte 6 verbunden sind.

Die Figuren 5 und 6 illustrieren weitere Einzelheiten der Kopplungseinrichtung 10 in geschnittener Perspektivansicht bzw. in schräger Draufsicht. Die Kopplungseinrichtung 10 umfasst die erste Kopplerplatte 11, in welche die Pneumatikkoppler 12 und die elektrischen Kontakte 14 eingelassen sind. Die erste Kopplerplatte 11 weist des Weiteren eine am Rand umlaufende Dichtlippe 21 auf. Die Dichtlippe 21 ist aus einem nachgiebigen Material, wie z. B. Silikongummi, hergestellt und ragt über die Oberfläche der ersten Kopplerplatte 11.

Die erste Kopplerplatte 11 weist einen in Figur 5 gezeigten rückseitigen hohlen Anschlusskörper 27 auf, in den die elektrischen Kontakte 14 eingebettet sind und in dessen Innenraum die Ausblaseinrichtung 13 angeordnet ist. Der Anschlusskörper 27 sitzt mit einer O-Ring-Dichtung 28 gedichtet in der Ausnehmung 8 der Endplatte 3 (siehe Figur 3). Der Anschlusskörper 27 ist einstückig mit dem vorderen Teil der ersten Kopplerplatte 11 gebildet und besteht wie dieser aus einem elektrisch isolierenden Material, z. B. PVC.

Am rückseitigen Ende des Anschlusskörpers 27 ist eine Isolatorplatte 29, z. B. aus Kunststoff oder Keramik, angeordnet, an der die elektrischen Kontakte 14 zur Verbindung mit dem Anschlusskabel 19 (siehe Figur 3) herausragen. Die Isolatorplatte 29 hat eine Bohrung, durch die der Innenraum des Anschlusskörpers 27 mit Druckluft beaufschlagt werden kann. An ihren vorderen, zur Oberfläche der ersten Kopplerplatte 11 weisenden Enden liegen die elektrischen Kontakte 14 frei (Figur 6). Sie sind auf einer Kreislinie verteilt in einem Kontaktabschnitt 15 angeordnet, der relativ zur übrigen Oberfläche der ersten Kopplerplatte 11 abgesenkt ist.

Die Pneumatikkoppler 12 umfassen Buchsen, die in die erste Kopplerplatte 11 eingelassen und mit den Pneumatikanschlüssen 26 in der Endplatte 3 (siehe Figur 3) verbunden sind. Die Pneumatikkoppler 12 sind z. B. wie dargestellt auf einer Kreislinie verteilt angeordnet, können aber bei abweichenden Bauformen anders positioniert sein.

Die Ausblaseinrichtung 13 umfasst einen Hohlzylinder 20, an dessen vorderen, zur Oberfläche der ersten Kopplerplatte 11 weisenden Ende die Axial- und Lateraldüsen 16, 17 und die Umlenkplatte 18 angeordnet sind. Der Hohlzylinder 20 ist im Anschlusskörper 27 verschiebbar angeordnet. Bei Beaufschlagung der Ausblaseinrichtung 13 mit Druckluft und im ungekoppelten Zustand der Kopplungseinrichtung 10 wird die Ausblaseinrichtung 13 vorgeschoben, bis ein rückseitiger Vorsprung 30 an einer Stufe im Innenraum des Anschlusskörpers 27 anliegt. Im gekoppelten Zustand der Kopplungseinrichtung 10 wird die Ausblaseinrichtung 13 durch die anliegende Steckereinrichtung 22 in den Hohlkörper 27 geschoben, so dass die Axial- und Lateraldüsen 16, 17 und die Umlenkplatte 18 in der ersten Kopplerplatte 11 versenkt sind.

Der Hohlzylinder 20 weist an seinem vorderen Ende eine Düseneinheit auf. In der Düseneinheit führt eine axial gerichtete, mittige Bohrung 31 zur Axialdüse 16. Des Weiteren weist die Düseneinheit eine umlaufende Einkerbung auf, so dass am freien Ende der Düseneinheit die Umlenkplatte 18 gebildet wird. Seitlich um die mittige Bohrung 31 azimuthal verteilt führen weitere Bohrungen zu den Lateraldüsen 17. Die Lateraldüsen 17 münden in der Einkerbung unter der Umlenkplatte 18, so dass über die Lateraldüsen 17 austretende Druckluft von der Umlenkplatte 18 seitlich auf die elektrischen Kontakte 14 im Kontaktabschnitt 15 (siehe Figur 6, Pfeile) gelenkt wird.

Figur 7 illustriert weitere Einzelheiten der Steckereinrichtung 22 in geschnittener Perspektivansicht. Die Steckereinrichtung 22 umfasst die zweite Kopplerplatte 23, in welche die Pneumatikkoppler 24 und die federnden elektrischen Kontakte 25 eingelassen sind, und einen rückseitigen Anschlusskörper 27. Die zweite Kopplerplatte 23 ist mit Schrauben 32 an der Seitenplatte 6 der Palette 2 befestigt (siehe Figuren 2, 4), wobei der rückseitige Anschlusskörper 27, seitlich mit einer O-Ring-Dichtung 28 gedichtet, in die Ausnehmung 8 der Seitenplatte 6 ragt. Der Anschlusskörper 27 ist einstückig mit dem vorderen Teil der zweiten Kopplerplatte 23 gebildet und besteht wie dieser aus einem elektrisch isolierenden Material, z. B. PVC.
Die Pneumatikkoppler 24 der Steckereinrichtung 22 umfassen sich verjüngende Steckerstifte jeweils mit einer O-Ring-Dichtung 33. Die Pneumatikkoppler 24 sind so dimensioniert und angeordnet, dass sie in die Pneumatikkoppler 12 der Kopplungseinrichtung 10 passen und mit diesen im gekoppelten Zustand eine dichte pneumatische Verbindung bilden.
Die federnden elektrischen Kontakte 25 sind in den in Figur 7 gezeigten rückseitigen Anschlusskörper 27 eingebettet. Die federnden elektrischen Kontakte 25 liegen in einem mittig vorspringenden Abschnitt der zweiten Kopplerplatte 23 frei, der im gekoppelten Zustand in den Kontaktabschnitt 15 der Kopplungseinrichtung 10 ragt.

### Bezugszeichenliste

- 1: Bauteil, Roboterarm
- 2: Bauteil, Palette
- 3: Endplatte
- 4: Einzugselement
- 5: Einzugsnippel
- 6: Seitenplatte
- 7: Vertiefung
- 8: Ausnehmung
- 9: Druckleitung
- 10: Kopplungseinrichtung
- 11: erste Kopplerplatte
- 12: Pneumatikkoppler der Kopplungseinrichtung
- 13: Ausblaseinrichtung
- 14: elektrischer Kontakt der Kopplungseinrichtung
- 15: Kontaktabschnitt
- 16: Axialdüse
- 17: Lateraldüse
- 18: Umlenkplatte
- 19: Anschlusskabel
- 20: Hohlzylinder
- 21: Dichtlippe
- 22: Steckereinrichtung
- 23: zweite Kopplerplatte
- 24: Pneumatikkoppler der Steckereinrichtung
- 25: elektrischer Kontakt der Steckereinrichtung
- 26: Pneumatikanschlüsse
- 27: Hohlkörper
- 28: O-Ring-Dichtung
- 29: Isolatorplatte
- 30: Vorsprung
- 31: Bohrung
- 32: Schraube
- 33: O-Ring-Dichtung

## Patentansprüche

1. Kopplungseinrichtung (10), die zur Mediendurchführung zwischen zwei Bauteilen (1, 2) eingerichtet ist, umfassend:
a) eine erste Kopplerplatte (11), die mindestens einen Pneumatikkoppler (12) aufweist, und
b) eine Ausblaseinrichtung (13), die zur Beaufschlagung der ersten Kopplerplatte (11) mit einem Luftstrom eingerichtet ist,
c) wobei die erste Kopplerplatte (11) mindestens einen elektrischen Kontakt (14) aufweist,
**dadurch gekennzeichnet,**
d) dass die erste Kopplerplatte (11) eine umlaufende Dichteinrichtung (21) aufweist, die angeordnet ist, den mindestens einen Pneumatikkoppler (12), die Ausblaseinrichtung (13) und den mindestens einen elektrischen Kontakt (14) in einem Zustand, in dem die Kopplungseinrichtung mit einem benachbarten Bauteil gekoppelt ist, gegenüber der Umgebung abzudichten.

2. Kopplungseinrichtung gemäß Anspruch 1, bei der die Dichteinrichtung eine umlaufende Dichtlippe (21), die über die erste Kontaktplatte (11) vorragt, oder eine umlaufende Dichtfläche umfasst.

3. Kopplungseinrichtung gemäß einem der vorhergehenden Ansprüche, bei der
- die erste Kopplerplatte (11) aus einem elektrisch isolierenden Material gebildet ist, und/oder
- die erste Kopplerplatte (11) einen zentralen Kontaktabschnitt (15) aufweist, in dem der mindestens eine elektrische Kontakt (14) und die Ausblaseinrichtung (13) angeordnet sind, und/oder
- der Kontaktabschnitt (15) in der ersten Kopplerplatte (11) eine Vertiefung bildet.

4. Kopplungseinrichtung gemäß einem der vorhergehenden Ansprüche, bei der
- die Ausblaseinrichtung (13) mindestens eine Axialdüse (16) aufweist, die so angeordnet ist, dass der Luftstrom von der mindestens einen Axialdüse (16) in eine Umgebung der ersten Kopplerplatte gerichtet wird, und/oder
- die Ausblaseinrichtung mindestens eine Lateraldüse (17) und eine Umlenkplatte (18) aufweist, die so angeordnet ist, dass der Luftstrom von der mindestens einen Lateraldüse (17) gegen die Umlenkplatte (18) und von dieser auf die erste Kopplerplatte (11) gerichtet wird, und/oder
- die Ausblaseinrichtung (13) einen in die erste Kopplerplatte eingelassenen Hohlzylinder (20) umfasst, an dessen vorderen Ende die mindestens eine Axialdüse (16) und/oder die mindestens eine Lateraldüse (17) mit der Umlenkplatte (18) angeordnet ist und dessen rückseitiges Ende mit Druckluft aus einer Druckluftquelle beaufschlagt werden kann.

5. Kopplungseinrichtung gemäß Anspruch 4, bei der
- der Hohlzylinder (20) in der ersten Kopplerplatte (11) zwischen einer vorstehenden Position und einer versenkten Position verschiebbar ist, in denen die mindestens eine Axialdüse (16) und/oder die mindestens eine Lateraldüse (17) mit der Umlenkplatte (18) jeweils über die erste Kopplerplatte (11) ragen oder in der ersten Kopplerplatte (11) versenkt sind.

6. Kopplungseinrichtung gemäß einem der vorhergehenden Ansprüche, bei der
- der mindestens eine Pneumatikkoppler (12) in der ersten Kopplerplatte (11) versenkt angeordnet ist.

7. Kopplungseinrichtung gemäß einem der vorhergehenden Ansprüche, bei der
- die erste Kopplerplatte (11) an einem Arm (1) einer Robotereinrichtung oder an einer Greifereinrichtung, z. B. für ein Werkstück, befestigt ist.

8. Steckereinrichtung (22), die zur Mediendurchführung zwischen zwei Bauteilen (1, 2), nämlich zur Verbindung mit einer Kopplungseinrichtung (10) gemäß einem der vorhergehenden Ansprüche eingerichtet ist, umfassend:
- eine zweite Kopplerplatte (23), die mindestens einen Pneumatikkoppler (24) und mindestens einen elektrischen Kontakt (25) aufweist,
**dadurch gekennzeichnet,**
- dass die zweite Kopplerplatte (23) eine umlaufende Dichtlippe aufweist, die angeordnet ist, den mindestens einen Pneumatikkoppler (24) und den mindestens einen elektrischen Kontakt (25) in einem Zustand, in dem die Steckereinrichtung (22) mit der Kopplungseinrichtung (10) verbunden ist, gegenüber der Umgebung abzudichten.

9. Steckereinrichtung gemäß Anspruch 8, bei der
- der mindestens eine Pneumatikkoppler (24) von der zweiten Kopplerplatte (23) abstehend angeordnet ist.

10. Steckereinrichtung gemäß einem der Ansprüche 8 oder 9, bei der
- der mindestens eine elektrische Kontakt (25) mindestens einen von der zweiten Kopplerplatte (23) abstehenden, federnd angeordneten Kontakt umfasst.

11. Steckereinrichtung gemäß einem der Ansprüche 8 oder 10, bei der
- die zweite Kopplerplatte (23) aus einem elektrisch isolierenden Material gebildet ist.

12. Steckereinrichtung gemäß einem der Ansprüche 8 oder 11, bei der
- die zweite Kopplerplatte (23) an einer Greifereinrichtung, z. B. für ein Werkstück, oder an einem Arm (1) einer Robotereinrichtung befestigt ist.

13. Mediendurchführung (10, 22), die zur Kopplung von zwei Bauteilen (1, 2) eingerichtet ist, umfassend
- eine Kopplungseinrichtung (10) gemäß einem der Ansprüche 1 bis 7, wobei die Dichteinrichtung (21) der Kopplungseinrichtung (10) eine Dichtfläche umfasst, und
- eine Steckereinrichtung (22) gemäß einem der Ansprüche 8 bis 12.

14. Verfahren zur Kopplung eines ersten Bauteils (1), das mit einer Kopplungseinrichtung (10) gemäß einem der Ansprüche 1 bis 7 ausgestattet ist, mit einem zweiten Bauteil (2), das mit einer Steckereinrichtung (22) gemäß einem der Ansprüche 8 bis 12 ausgestattet ist, wobei
- die Dichteinrichtung (21) der Kopplungseinrichtung (10) eine Dichtfläche umfasst; und wobei
- die Kopplungseinrichtung (10) und die Steckereinrichtung (22) von einem ungekoppelten Zustand in einen gekoppelten Zustand oder umgekehrt überführt werden.

15. Verfahren gemäß Anspruch 14, bei dem
- im ungekoppelten Zustand die Ausblaseinrichtung (13) mit einem Luftdruck beaufschlagt und der Luftstrom mindestens auf die erste Kontaktplatte (11) aufgeblasen wird, und
- im gekoppelten Zustand die Pneumatikkoppler (12, 24) und die elektrischen Kontakte (14, 25) der Kopplungseinrichtung (10) und der Steckereinrichtung (22) miteinander verbunden sind und die zweite Kontaktplatte (23) die Ausblaseinrichtung (13) blockiert.

## Claims

1. Coupling device (10) which is set up for the passage of media between two components (1, 2), comprising:
a) a first coupler plate (11) which has at least one pneumatic coupler (12), and
b) a blow-out device (13) which is set up to apply an air flow to the first coupler plate (11),
c) wherein the first coupler plate (11) comprises at least one electrical contact (14),
**characterized in that**
d) the first coupler plate (11) has a circumferential sealing device (21) which is arranged to seal the at least one pneumatic coupler (12), the blow-out device (13) and the at least one electrical contact (14) from the environment in a state in which the coupling device is coupled to an adjacent component.

2. Coupling device according to claim 1, in which the sealing device comprises a circumferential sealing lip (21), which projects beyond the first contact plate (11), or a circumferential sealing surface.

3. Coupling device in accordance with one of the preceding claims, in which
- the first coupler plate (11) is formed from an electrically insulating material, and/or
- the first coupler plate (11) has a central contact section (15) in which the at least one electrical contact (14) and the blow-out device (13) are arranged, and/or
- the contact portion (15) forms a recess in the first coupler plate (11).

4. Coupling device according to any of the preceding claims, wherein
- the blow-out device (13) has at least one axial nozzle (16) which is arranged such that the air flow from the at least one axial nozzle (16) is directed into an environment of the first coupler plate, and/or
- the blow-out device has at least one lateral nozzle (17) and a deflection plate (18) which is arranged such that the air flow from the at least one lateral nozzle (17) is directed towards the deflection plate (18) and from the latter to the first coupler plate (11), and/or
- the blow-out device (13) comprises a hollow cylinder (20) which is embedded in the first coupling plate and at the front end of which the at least one axial nozzle (16) and/or the at least one lateral nozzle (17) with the deflecting plate (18) is arranged and the rear end of which can be acted upon by compressed air from a compressed air source.

5. Coupling device in accordance with claim 4, in which
- the hollow cylinder (20) is displaceable in the first coupler plate (11) between a projecting position and a recessed position, in which the at least one axial nozzle (16) and/or the at least one lateral nozzle (17) with the deflecting plate (18) respectively project beyond the first coupler plate (11) or are recessed in the first coupler plate (11).

6. Coupling device in accordance with one of the preceding claims, in which
- the at least one pneumatic coupler (12) is arranged recessed in the first coupler plate (11).

7. Coupling device in accordance with one of the preceding claims in which
- the first coupler plate (11) is fixed to an arm (1) of a robot device or to a gripper device, e.g. for a workpiece.

8. Connector device (22) adapted for media passage between two components (1, 2), namely for connection to a coupling device (10) according to one of the preceding claims, comprising:
- a second coupler plate (23) comprising at least one pneumatic coupler (24) and at least one electrical contact (25),
**characterized in that**
- the second coupler plate (23) has a circumferential sealing lip which is arranged to seal the at least one pneumatic coupler (24) and the at least one electrical contact (25) with respect to the environment in a state in which the connector device (22) is connected to the coupling device (10).

9. Connector device in accordance with claim 8, in which
- the at least one pneumatic coupler (24) is arranged projecting from the second coupler plate (23).

10. Connector device in accordance with one of claims 8 or 9, in which
- the at least one electrical contact (25) comprises at least one resiliently arranged contact projecting from the second coupler plate (23).

11. Connector device according to one of the claims 8 or 10, in which
- the second coupler plate (23) is formed of an electrically insulating material.

12. Connector device according to any of claims 8 or 11, in which
- the second coupler plate (23) is attached to a gripper device, e.g. for a workpiece, or to an arm (1) of a robot device.

13. Media feedthrough (10, 22) which is arranged for coupling two components (1, 2), comprising
- a coupling device (10) according to any of claims 1 to 7, wherein the sealing device (21) of the coupling device (10) comprises a sealing surface, and
- a connector device (22) according to one of claims 8 to 12.

14. Method for coupling a first component (1) provided with a coupling device (10) according to any one of claims 1 to 7 to a second component (2) provided with a connector device (22) according to any one of claims 8 to 12, wherein
- the sealing device (21) of the coupling device (10) comprises a sealing surface, and wherein
- the coupling device (10) and the connector device (22) are transferred from an uncoupled state to a coupled state or vice versa.

15. Method according to claim 14 in which
- in the uncoupled state, an air pressure is applied to the blow-out device (13) and the air flow is blown at least onto the first contact plate (11), and
- in the coupled state, the pneumatic couplers (12, 24) and the electrical contacts (14, 25) of the coupling device (10) and the connector device (22) are connected to one another, and the second contact plate (23) blocks the blow-out device (13).

## Revendications

1. Dispositif de couplage (10), qui est mis au point pour faire passer des milieux entre deux composants (1, 2), comprenant :
a) une première plaque de coupleur (11), qui présente au moins un coupleur pneumatique (12), et
b) un dispositif d'évacuation par soufflage (13), qui est mis au point pour soumettre la première plaque de coupleur (11) à l'action d'un flux d'air,
c) dans lequel la première plaque de coupleur (11) présente au moins un contact (14) électrique,
**caractérisé en ce**
d) que la première plaque de coupleur (11) présente un dispositif d'étanchéité (21) périphérique, qui est disposé pour étanchéifier par rapport à l'environnement extérieur l'au moins un coupleur pneumatique (12), le système d'évacuation par soufflage (13) et l'au moins un contact (14) électrique dans un état, dans lequel le dispositif de couplage est couplé à un composant adjacent.

2. Dispositif de couplage selon la revendication 1, où le dispositif d'étanchéité comprend une lèvre d'étanchéité (21) périphérique, qui dépasse de la première plaque de coupleur (11), ou une surface d'étanchéité périphérique.

3. Dispositif de couplage selon l'une quelconque des revendications précédentes, où
- la première plaque de coupleur (11) est formée à partir d'un matériau électriquement isolant, et/ou
- la première plaque de coupleur (11) présente une section de contact (15) centrale, dans laquelle l'au moins un contact (14) électrique et le dispositif d'évacuation par soufflage (13) sont disposés, et/ou
- la section de contact (15) forme dans la première plaque de coupleur (11) un renfoncement.

4. Dispositif de couplage selon l'une quelconque des revendications précédentes, où
- le dispositif d'évacuation par soufflage (13) présente au moins une buse axiale (16), qui est disposée de telle sorte que le flux d'air est dirigé depuis l'au moins une buse axiale (16) dans un environnement extérieur de la première plaque de coupleur, et/ou
- le système d'évacuation par soufflage présente au moins une buse latérale (17) et une plaque de déviation (18), qui est disposée de telle sorte que le flux d'air est dirigé depuis l'au moins une buse latérale (17) à l'encontre de la plaque de déviation (18) et depuis cette dernière sur la première plaque de coupleur (11), et/ou
- le dispositif d'évacuation par soufflage (13) comprend un cylindre creux (20) pratiqué dans la première plaque de coupleur, au niveau de l'extrémité avant duquel l'au moins une buse axiale (16) et/ou l'au moins une buse latérale (17) sont disposées avec la plaque de déviation (18) et dont l'extrémité arrière peut être soumise à l'action d'air comprimé provenant d'une source d'air comprimé.

5. Dispositif de couplage selon la revendication 4, où
- le cylindre creux (20) peut être coulissé dans la première plaque de coupleur (11) entre une position faisant saillie et une position abaissée, dans lesquelles l'au moins une buse axiale (16) et/ou l'au moins une buse latérale (17) dépassent avec la plaque de déviation (18) respectivement au-delà de la première plaque de coupleur (11) ou sont abaissées dans la première plaque de coupleur (11).

6. Dispositif de couplage selon l'une quelconque des revendications précédentes, où
- l'au moins un coupleur pneumatique (12) est disposé de manière abaissée dans la première plaque de coupleur (11).

7. Dispositif de couplage selon l'une quelconque des revendications précédentes, où
- la première plaque de coupleur (11) est fixée au niveau d'un bras (1) d'un dispositif formant robot ou d'un dispositif de préhension, par exemple pour une pièce.

8. Dispositif d'enfichage (22), qui est mis au moins pour faire passer des milieux entre deux composants (1, 2), à savoir pour être relié à un dispositif de couplage (10) selon l'une quelconque des revendications précédentes, comprenant :
- une deuxième plaque de coupleur (23), qui présente au moins un coupleur pneumatique (24) et au moins un contact (25) électrique,
**caractérisé en ce**
- que la deuxième plaque de coupleur (23) présente une lèvre d'étanchéité périphérique, qui est disposée pour étanchéifier par rapport à l'environnement extérieur l'au moins un coupleur pneumatique (24) et l'au moins un contact (25) électrique dans un état, dans lequel le dispositif d'enfichage (22) est relié au dispositif de couplage (10).

9. Dispositif d'enfichage selon la revendication 8, où
- l'au moins un coupleur pneumatique (24) est disposé de manière à dépasser de la deuxième plaque de coupleur (23).

10. Dispositif d'enfichage selon l'une quelconque des revendications 8 ou 9, où
- l'au moins un contact (25) électrique comprend au moins un contact dépassant de la deuxième plaque de coupleur (23), disposé sur ressorts.

11. Dispositif d'enfichage selon l'une quelconque des revendications 8 ou 10, où
- la deuxième plaque de coupleur (23) est formée à partir d'un matériau électriquement isolant.

12. Dispositif d'enfichage selon l'une quelconque des revendications 8 ou 11, où
- la deuxième plaque de coupleur (23) est fixée au niveau d'un dispositif de préhension, par exemple pour une pièce, ou au niveau d'un bras (1) d'un dispositif formant robot.

13. Passage de milieux (10, 22), qui est mis au point pour coupler deux composants (1, 2), comprenant
- un dispositif de couplage (10) selon l'une quelconque des revendications 1 à 7, dans lequel le dispositif d'étanchéité (21) du dispositif de couplage (10) comprend une surface d'étanchéité, et
- un dispositif d'enfichage (22) selon l'une quelconque des revendications 8 à 12.

14. Procédé servant à coupler un premier composant (1), qui est équipé d'un dispositif de couplage (10) selon l'une quelconque des revendications 1 à 7, avec un deuxième composant (2), qui est équipé d'un dispositif d'enfichage (22) selon l'une quelconque des revendications 8 à 12, dans lequel
- le dispositif d'étanchéité (21) du dispositif de couplage (10) comprend une surface d'étanchéité ; et dans lequel
- le dispositif de couplage (10) et le dispositif d'enfichage (22) sont transférés d'un état non couplé dans un état couplé, et inversement.

15. Procédé selon la revendication 14, où
- dans l'état non couplé, le dispositif d'évacuation par soufflage (13) est soumis à l'action d'air comprimé et le flux d'air est évacué par soufflage au moins sur la première plaque de contact (11), et
- dans l'état couplé, les coupleurs pneumatiques (12, 24) et les contacts (14, 25) électriques du dispositif de couplage (10) et du dispositif d'enfichage (22) sont reliés les uns aux autres et la deuxième plaque de contact (23) bloque le dispositif d'évacuation par soufflage (13).
